# EUROPEAN PATENT SPECIFICATION

(11) **EP 1 600 311 B1**
(45) Date of publication and mention of the grant of the patent: **17.08.2011**
(21) Application number: 05008713.9
(22) Date of filing: 21.04.2005
(51) Int. Cl.: B60G 3/18, B60G 7/02

(54) **Tractor with front suspension**
Traktor mit Vorderradaufhängung
Tracteur à suspension avant

(30) Priority: 26.05.2004 GB 0411916
(43) Date of publication of application: 30.11.2005
(73) Proprietor: AGCO GmbH, 87616 Marktoberdorf (DE)
(72) Inventor: Rathke, Gerd, 87616 Marktoberdorf (DE)
(74) Representative: Morrall, Roger

(56) References cited:
- EP-A- 1 188 641
- US-A1- 2002 175 486
- US-B1- 6 470 991
- US-B1- 6 520 277

## Description

The present invention relates to a farm tractor including a vehicle frame which carries driven front wheels and rear wheels. The vehicle frame includes a housing which includes an oil sump. A combustion engine serving as the driving motor is located on the housing. The housing also carries independent suspension for the front wheels and includes a differential transmission for driving the front wheels and a steering cylinder for pivoting the front wheels.

A farm tractor with the above mentioned features is known from US Patent No. 6,470,991 B1. The wheel suspension for the front wheels makes it possible to achieve good suspension comfort, which is particularly important with vehicle velocities of more than 50 km/h. A housing carrying the driving motor is part of the vehicle frame of the farm tractor. The housing in its upper portion adjacent to the driving motor forms an oil sump for the lubricating oil of the driving motor. A differential transmission for driving the front wheels and a steering cylinder for pivoting the front wheels are located in the portion located therebelow. Due to the arrangement of the differential transmission, the oil sump and the driving motor one above the other and the requirement of sufficient ground clearance determining the height of the under side of the vehicle frame, the portion of the vehicle located between the front wheels has a comparatively great vertical extension. Consequently, the view from the driver's seat of implements carried at the front of the tractor is restricted. It makes it even more difficult that the cooling fan which is arranged upstream of the driving motor in current powerful farm tractors has a substantial space requirement in the longitudinal direction as well as in the transverse plane of the vehicle. Thus there is a bulky front part of the tractor in front of the wheels which, on the one hand, makes it even more difficult to view a front mounted implement and which, on the other hand, results in the distance between the front power lift carrying the implement and the front wheels being longer than necessary. As a result, the suspension of the front wheels is highly loaded and the functionality of the implement is hard to control due to its great distance from the driver. Furthermore, a special frame has to be added for the connection of the front power lift to the known farm tractor frame. Not only does this increase the cost of construction but it also further increases the distance between the implement and the driver.

The problem which the present invention sets out to improve is the working conditions of the driver of a farm tractor especially with respect to the sight on front mounted implements.

To solve this problem, it is proposed to arrange the housing which laterally carries the independent wheel suspension of the front wheels to be a separate housing in front of the housing which carries the oil sump of the motor with respect to the normal direction of movement, and that this front housing includes in this front portion support locations for a lower suspension arrangement and for a lifting cylinder of an implement supporting front power lift.

Due to the arrangement of the oil sump, on the one hand, and of the differential transmission and the steering cylinder, on the other hand, in two separate housings arranged one after the other, the structural height of the farm tractor at this place is substantially reduced, and the sight from the driver's seat of implements mounted at the front of the tractor is improved. The structural height results from the predetermined required ground clearance of the vehicle, the height of the housing which carries the oil sump (determined by calculation of stability of the tractor frame) and the predetermined height of the driving motor. Since there is no necessity to exceed any one of these measures, the smallest possible tractor height at this place is realized. The same applies to the height of the forward housing which carries the wheel suspension. The height of this forward housing corresponds to the height of the housing which carries the motor such that there is sufficient space for the cooling fan in all directions above the housing without negatively influencing the improvement of sight by the cover covering the driving motor and the cooling fan. The supply of sufficient space for the cooling fan above the housing carrying the wheel suspension does not only improve the sight due to the small structural height of the tractor, but it also results in an additional sight improvement in the sense of decreased distance of the front implement with respect to the driver's cabin and to the front wheels, respectively. This reduction results from the fact of placing the cooling fan further towards the rear and because the power lift is directly mounted on front housing without using any additional frame. Consequently, the housing carrying the wheel suspension forms the front portion of the tractor frame. In this way, the front power lift may be arranged close to the front wheels in a weight saving manner at low structural expenditure and with few additional components. Due to the small distance, there is the additional advantage of making it possible to keep the axle load of the front wheels low.

Additional features of the present invention are contained in the dependent claims. Due to the fact that the working conditions for the driver are not unimportantly influenced by the driving comfort, it is further proposed to pivotally connect the transverse guiding arms of the wheel suspension to the front housing by resilient bearings. In this way, high-frequency vibrations produced by the cleats of the tires during fast movement on a road are kept away from the driver.

To further reduce the number of components required for connecting a front power lift to the farm tractor, the support locations for the front power lift are designed as one piece with the front housing which carries the wheel suspension.

In the following, the invention is explained in greater detail with respect to a perspective schematic view of the front portion of a farm tractor.

The front portion of the frame of the tractor includes two cast housings 1 and 2. The housings 1 and 2 are fixedly interconnected by screws or bolts. A driving motor 3 is located on the housing 1. The driving motor 3 is an internal combustion engine. The oil sump of the driving motor 3 is arranged in the housing 1.

Independent suspension 4 for each of the front wheels is arranged at the side of the housing 2. Only the wheel hubs 5 of the wheel suspension 4 with the associated reduction gearing are illustrated. Each suspension 4 includes an upper triangular transverse link 6 and a lower triangular transverse link 7. The links 6, 7 are each pivotally connected to the housing 2 by a resilient bearing 8. A link housing 9 extending approximately in a vertical direction is pivotally supported in the free end portions of the links 6, 7. The wheel hub 5 is rotatably supported on the link housing 9. The link housing 9 includes a steering arm 10 for pivoting the link housing 9. A steering rod 13 engages the steering arm 10, the steering rod 13 being pivotally connected to a piston rod 11 of a steering cylinder 12 which is located in the housing 2. A differential transmission (not illustrated) is arranged in the housing 2, the driven shaft 14 of the differential transmission is connected to the associated reduction gearing located in the wheel hub 5. A suspension cylinder 15 which is connected to the link 7 is supported on the upper lateral portion of the housing 2.

A cooling fan (not illustrated) is arranged above the housing 2 and in front of the driving motor 3. The front of the housing 2 includes two lower and two upper cast bearing lugs 16, 17. The lower bearing lugs 16 support the lower suspension arrangement 18 of the front power lift 19, while lifting cylinders 20 for vertically pivoting the lower suspension arrangement 18 engage the upper bearing lugs 17. Due to the fact that the bearing lugs 16 and 17 are arranged directly on the housing 2, there is a very small distance between an implement carried by the front power lift 19 and the front wheels when considered in the longitudinal direction of the tractor.

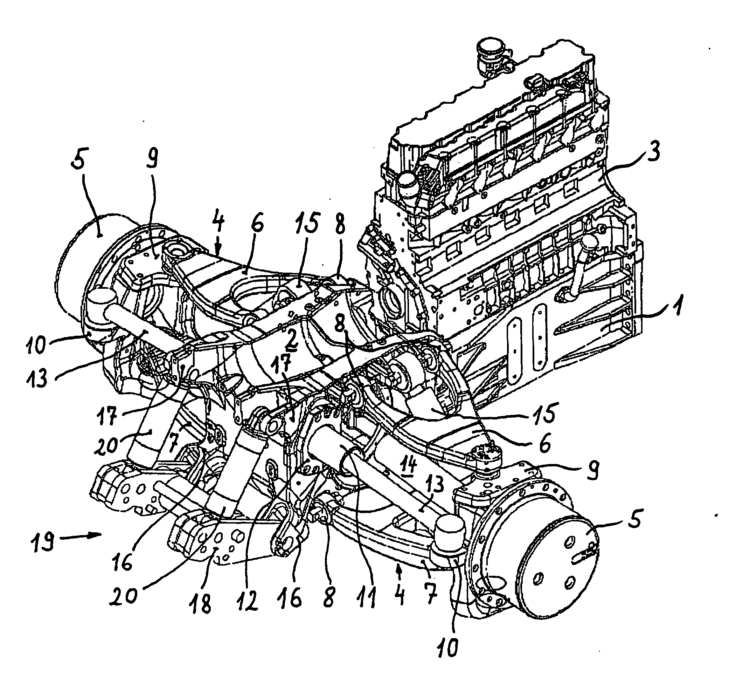

## Claims

1. A farm tractor, comprising a vehicle frame which carries driven front wheels and rear wheels, the vehicle frame including a housing which includes an oil sump on which an internal combustion engine serving as the driving motor (3) is located and which carries laterally extending independent wheel suspension (4) for the front wheels, the housing also including the differential transmission for driving the front wheels and a steering cylinder for pivoting the front wheels,
**characterised in that**
the housing (2) which carries the laterally extending independent wheel suspension (4) of the front wheels is arranged as a separate housing in front of the housing (1) including the oil sump with respect to the normal direction of movement of the tractor, and **in that**
the front housing (2) at its front portion includes support locations (16,17) for a lower suspension arrangement (18) and for a lifting cylinder (20) of an implement supporting front power lift (19).

2. A tractor according to claim 1
**characterised in that**
the transverse extending wheel suspension includes guiding arms (6,7) which are pivotally connected to the front housing (2) by resilient bearings (8).

3. A farm tractor according to claim 1 and 2,
**characterised in that**
the lower and upper support locations (16,17) for the front power lift (19) are designed as one piece with the front housing (2).

## Patentansprüche

1. Landwirtschaftliches Zugfahrzeug oder Traktor mit einem Fahrzeugrahmen, der angetriebene Vorderräder und Hinterräder trägt, wobei der Fahrzeugrahmen ein Gehäuse aufweist, welches einen Ölsumpf besitzt, auf dem eine Brennkraftmaschine angeordnet ist, die als Antriebsmotor (3) dient, und der oder welches sich lateral erstreckende unabhängige Radaufhängungen (4) für die Vorderräder trägt, wobei das Gehäuse auch ein Differentialgetriebe zum Antrieb der Vorderräder und einen Lenkzylinder zum Verschwenken der Vorderräder aufweist,
**dadurch gekennzeichnet, dass**
das Gehäuse (2), welches die sich lateral erstreckenden unabhängigen Radaufhängungen (4) der Vorderräder trägt, als separates Gehäuse hinsichtlich der normalen Bewegungsrichtung des Zugfahrzeugs oder Traktors vor dem Gehäuse (1) mit dem Ölsumpf angeordnet oder ausgebildet ist und
dass das vordere Gehäuse (2) bei seinem vorderen Bereich Abstützorte (16, 17) für eine untere Aufhängungsanordnung (18) und für einen Hebezylinder (20) einer ein Anbaugerät tragenden oder abstützenden vorderen Leistungs- oder Kraft-Hebeeinrichtung (19) aufweist.

2. Zugfahrzeug oder Traktor nach Anspruch 1,
**dadurch gekennzeichnet, dass**
die sich transversal erstreckende Fahrzeugaufhängung Führungsarme (6, 7) besitzt, die mit elastischen oder nachgiebigen Lagern (8) verschwenkbar mit dem vorderen Gehäuse (2) verbunden sind.

3. Zugfahrzeug oder Traktor nach Anspruch 1 oder 2,
**dadurch gekennzeichnet, dass**
der untere und obere Abstützort (16, 17) für die vordere Leistungs- oder Kraft-Hebeeinrichtung (19) einstückig mit dem vorderen Gehäuse (2) gestaltet sind.

## Revendications

1. Tracteur agricole, comprenant un châssis de véhicule qui supporte des roues avant et des roues arrière entraînées, le châssis de véhicule comportant un logement qui comporte un carter d'huile, sur lequel un moteur à combustion interne servant de moteur d'entraînement (3) est agencé, et qui supporte une suspension de roue indépendante s'étendant latéralement (4) pour les roues avant, le logement comportant aussi la transmission différentielle destinée à entraîner les roues avant et un vérin de direction destiné à faire pivoter les roues avant,
**caractérisé en ce que**
le logement (2) qui supporte la suspension de roue indépendante s'étendant latéralement (4) des roues avant est agencé sous la forme d'un logement séparé face au logement (1) comportant le carter d'huile, par rapport à la direction normale de déplacement du tracteur, et **en ce que**
le logement avant (2), au niveau de sa partie avant, comporte des emplacements de support (16, 17) destinés à un agencement de suspension inférieur (18) et à un vérin de levage (20) d'un outillage supportant un élévateur avant (19).

2. Tracteur agricole selon la revendication 1, **caractérisé en ce que** la suspension de roue s'étendant transversalement comporte des bras de guidage (6, 7) qui sont raccordés de manière à pouvoir pivoter sur le logement avant (2) par des paliers élastiques (8).

3. Tracteur agricole selon la revendication 1 et 2, **caractérisé en ce que** les emplacements de support inférieur et supérieur (16, 17) de l'élévateur avant (19) sont définis en une seule pièce avec le logement avant (2).
